# EUROPEAN PATENT APPLICATION

(11) **EP 3 537 725 A1**
(43) Date of publication of application: **11.09.2019**
(21) Application number: 19170947.6
(22) Date of filing: 18.01.2016
(51) Int. Cl.: H04R 1/02, G06F 3/0482, G06F 3/0485

(54) **ACOUSTIC OUTPUT DEVICE AND CONTROL METHOD THEREOF**

(30) Priority: 29.01.2015 KR 20150014132
(62) Divisional of application: 16151759.4
(71) Applicant: Samsung Electronics Co., Ltd., Gyeonggi-do 16677 (KR)
(72) Inventor: KIM, Ji-gwang, Seoul (KR); KIM, Joon-soo, Seoul (KR)
(74) Representative: Hewett, Jonathan Michael Richard

(57) **Abstract**

An acoustic output device is provided. The acoustic output device including: a speaker unit; a user interface unit configured to provide a user interface region to which acoustic contents are mapped and including a scroll user interface (UI) for browsing the acoustic contents according to a scroll interaction on the user interface region; and a processor configured to reproduce a preset section of an acoustic content of the acoustic contents mapped to a first area of the user interface region as he scroll UI moves through a position on the user interface region corresponding to the first area to provide a pre-listening function for the acoustic content through the speaker unit.

## Description

The present invention relates to an acoustic output device and a control method thereof, and more particularly, to an acoustic output device capable of providing a pre-listening function, and a control method thereof.

In accordance with the development of an electronic technology, various types of electronic apparatuses have been developed and are widely used. Particularly, an acoustic output device such as an audio system, which is one of the electric home appliances, has been continuously developed for the many past years.

In accordance with improvement of performance of the acoustic output device, the acoustic output device has provided acoustic contents in a pre-listening form (i.e., a preview form).

However, in a pre-listening (or a preview) function provided in an acoustic output device of the related art, in the case in which a user desires to listen to a preview of each of a plurality of acoustic contents, a process of selecting an acoustic content and then selecting the preview function for the selected acoustic content should be repeated for each of the acoustic contents. Such cumbersome process of selecting the plurality of acoustic contents and then selecting the preview function for each acoustic content may be inconvenient for the user.

One or more exemplary embodiments of the present invention provide an acoustic output device capable of providing a continuous and linear pre-listening or preview function for a plurality of acoustic contents, and a control method thereof.

According to an aspect of an exemplary embodiment, there is provided an acoustic output device including: a speaker unit; a user interface unit providing a user interface region to which acoustic contents are mapped and a scroll user interface (UI) for browsing the acoustic contents depending on a scroll interaction on the user interface region; and a processor reproducing a preset section of an acoustic content mapped to a position at which the scroll UI moves on the user interface region to provide a pre-listening function for the corresponding acoustic content through the speaker unit.

The processor may reproduce the preset section of the acoustic content corresponding to the position at which the scroll UI stops on the user interface region during a time in which the scroll UI stops.

The processor may continuously reproduce preset sections of a plurality of acoustic contents corresponding to each of positions to which the scroll UI continuously moves to provide a linear pre-listening function, when the scroll UI continuously moves depending on the scroll interaction.

The processor may map virtual acoustic content lists to the user interface region to decide and reproduce an acoustic content corresponding to a position of the scroll UI among all acoustic contents mapped to the user interface region.

The speaker unit may include at least one speaker arranged in a preset direction and a cover unit provided on a front surface of the at least one speaker and covering the speaker, and the scroll UI may be implemented by a device that is physically movable in the preset direction on the cover unit.

The scroll UI may include a projector, and the processor may control the projector to project an image of information on an acoustic content corresponding to a changed position of the scroll UI on a region corresponding to the changed position of the scroll UI, when a position of the scroll UI is changed depending on a user command.

The user interface unit may include a rail unit disposed in the preset direction below the speaker unit and implemented so that the scroll UI is physically movable, and the processor may determine the acoustic content corresponding to the position at which the scroll UI moving depending on a user command on the rail unit stops.

The acoustic output device may further include a sensing unit sensing an absolute coordinate of the scroll UI on the rail unit, wherein the processor determines the acoustic content corresponding to the position at which the scroll UI stops based on the absolute coordinate sensed by the sensing unit.

The processor may reproduce the corresponding acoustic content from the beginning of the corresponding acoustic content when a music selection command is input through the scroll UI during a period in which pre-listening for the corresponding acoustic content is provided through the speaker unit.

The user interface unit may be implemented by a touch screen, and the processor browses an acoustic content depending on a touch interaction of scrolling the scroll UI on the touch screen.

According to an aspect of another exemplary embodiment, there is provided a control method of an acoustic output device including: moving a scroll UI for browsing acoustic contents on a user interface region to which the acoustic contents are mapped depending on a scroll interaction; and providing a pre-listening function for an acoustic content mapped to a position to which the scroll UI moves on the user interface region by reproducing a preset section of the corresponding acoustic content.

In the providing of the pre-listening function, the preset section of the acoustic content corresponding to the position at which the scroll UI stops on the user interface region may be reproduced during a time in which the scroll UI stops.

In the providing of the pre-listening function, when the scroll UI continuously moves depending on the scroll interaction, preset sections of a plurality of acoustic contents corresponding to each of positions to which the scroll UI continuously moves may be continuously reproduced to provide a linear pre-listening function.

In the providing of the pre-listening function, virtual acoustic content lists may be mapped to the user interface region to decide and reproduce an acoustic content corresponding to a position of the scroll UI among all the acoustic contents mapped to the user interface region.

The control method may further include providing information on an acoustic content corresponding to a changed position of the scroll UI to a region corresponding to the changed position of the scroll UI when a position of the scroll UI is changed depending on a user command.

The speaker unit may include at least one speaker arranged in a preset direction and a cover unit provided on a front surface of the at least one speaker and covering the speaker, and the scroll UI may be implemented by a device that is physically movable in the preset direction on the cover unit.

The acoustic output device may further include a rail unit disposed in the preset direction below the speaker unit and implemented so that the scroll UI is physically movable, and in the providing of the pre-listening function, an acoustic content corresponding to a position at which the scroll UI moving depending on a user command on the rail unit stops may be determined.

The providing of the pre-listening function may include: sensing an absolute coordinate of the scroll UI on the rail unit using a sensor; and determining the acoustic content corresponding to the position at which the scroll UI stops based on the sensed absolute coordinate.

The control method may further include reproducing the corresponding acoustic content from the beginning of the corresponding acoustic content when a music selection command is input through the scroll UI during a period in which pre-listening for the corresponding acoustic content is provided.

The user interface region may be implemented by a touch screen, and in the moving of the scroll UI, the scroll UI may be moved depending on a touch interaction of scrolling the scroll UI on the touch screen.

According to an aspect of another exemplary embodiment, there is provided an acoustic output device including: a speaker unit; a user interface unit configured to provide a user interface region to which acoustic contents are mapped and comprising a scroll user interface (UI) for browsing the acoustic contents according to a scroll interaction on the user interface region; and a processor configured to reproduce a preset section of an acoustic content of the acoustic contents mapped to a first area of the user interface region as he scroll UI moves through a position on the user interface region corresponding to the first area to provide a pre-listening function for the acoustic content through the speaker unit.

The processor may be configured to reproduce the preset section of the acoustic content corresponding to the position at which the scroll UI stops on the user interface region during a time in which the scroll UI stops at the position.

The processor may be configured to continuously reproduce a preset section of each of a plurality of acoustic contents mapped to a respective area, the respective area corresponding to each of positions through which the scroll UI continuously moves to provide a sequential pre-listening function in response to the scroll UI continuously moving according to the scroll interaction.

The processor may be configured to map acoustic content lists to the user interface region, and the processor may be configured to determine and reproduce an acoustic content of all acoustic contents mapped to the user interface region according to a position of the scroll UI on the user interface region.

The speaker unit may include: at least one speaker arranged in a preset direction; and a cover unit provided on the at least one speaker and covering the at least one speaker, and the scroll UI may include a device configured to move in the preset direction on the cover unit.

The scroll UI may include a projector, and the processor may be configured to control the projector to project an image of information on an acoustic content mapped on a second area, the second area corresponding to a changed position of the scroll UI on the user interface region in response to a position of the scroll UI being changed.

The user interface unit may include a rail unit extending in the preset direction and the scroll UI is configured to move along the rail unit, and the processor may be configured to determine the acoustic content mapped on the first area corresponding to the position at which the scroll UI stops according to a user command.

The acoustic output device may further include a sensing unit configured to sense an absolute coordinate of the scroll UI on the rail unit, and the processor may be configured to determine the acoustic content mapped on the first area corresponding to the position at which the scroll UI stops based on the absolute coordinate sensed by the sensing unit.

The processor may be configured to reproduce the acoustic content mapped at the first area from beginning of the acoustic content in response to a selection command being input through the scroll UI during a period in which pre-listening for the acoustic content is provided through the speaker unit.

The user interface unit may include a touch screen, and the processor may be configured to browse through a plurality of acoustic contents according to touch interaction of scrolling the scroll UI on the touch screen.

According to an aspect of another exemplary embodiment, there is provided a control method of an acoustic output device, including: moving a scroll UI for browsing acoustic contents on a user interface region to which the acoustic contents are mapped according to a scroll interaction; and providing a pre-listening function for an acoustic content of the acoustic contents mapped to a first area of the user interface region as the scroll UI moves through a position of the user interface region corresponding to the area by reproducing a preset section of the acoustic content mapped on the first area.

The providing the pre-listening function includes reproducing the preset section of the acoustic content mapped on the first area corresponding to the position at which the scroll UI stops on the user interface region during a time in which the scroll UI stops at the position.

The providing the pre-listening function comprises in response to the scroll UI continuously moving according to the scroll interaction, continuously reproducing a preset section of each of a plurality of acoustic contents mapped to a respective area, the respective area corresponding to each of positions through which the scroll UI continuously moves, to provide a sequential pre-listening function.

The providing the pre-listening function may include: mapping acoustic content lists to the user interface region; and determining and reproducing an acoustic content of all the acoustic contents mapped to the user interface region according to a position of the scroll UI on the user interface region.

The control method may further include providing information on an acoustic content mapped on a second area, the second area corresponding to a changed position of the scroll UI in response to the changed position of the scroll UI according to a user command.

The acoustic output device may further include a rail unit extending in the preset direction and the scroll UI is configured to move along the rail unit, and the providing the pre-listening function may include determining an acoustic content mapped on an area, the area corresponding to a position at which the scroll UI moving according to a user command stops on the rail unit.

The providing the pre-listening function may include: sensing an absolute coordinate of the scroll UI on the rail unit using a sensor; and determining the acoustic content mapped at the area, the area corresponding to the position at which the scroll UI stops based on the sensed absolute coordinate.

The control method may further include reproducing the acoustic content mapped in the first area from beginning of the acoustic content in response to a selection command being input through the scroll UI during a period in which pre-listening for the corresponding acoustic content is provided.

The user interface region may include a touch screen, and the moving the scroll UI may include moving the scroll UI according to a touch interaction of scrolling the scroll UI on the touch screen.

Additional and/or other aspects and advantages will be set forth in part in the description which follows and, in part, will be obvious from the description, or may be learned by practice of the exemplary embodiments.

The above and/or other aspects will be more apparent by describing exemplary embodiments with reference to the accompanying drawings, in which:
FIG. 1 is a view illustrating an implementation of an acoustic output device according to an exemplary embodiment;
FIG. 2 is a view illustrating a configuration of the acoustic output device according to an exemplary embodiment;
FIG. 3 is a block diagram illustrating a detailed configuration of the acoustic output device illustrated in FIG. 2;
FIGS. 4A and 4B are views for describing implementations of acoustic output devices according to various exemplary embodiments;
FIG. 5 is a view for describing a method of providing a graphic user interface (GUI) onto a cover unit according to an exemplary embodiment;
FIGS. 6A and 6B are views for describing a method of controlling a scroll state of a scroll user interface (UI) according to various exemplary embodiments;
FIGS. 7A to 7C are views for describing a method of providing a pre-listening function according to an exemplary embodiment;
FIGS. 8a and 8B are views for describing a method of selecting an acoustic content during provision of a pre-listening function according to an exemplary embodiment;
FIGS. 9A to 9C are views for describing a method of providing a pre-listening function in a touch based device according to an exemplary embodiment;
FIG. 10 is a view for describing a method of providing a pre-listening function in a device that may be remotely controlled according to an exemplary embodiment; and
FIG. 11 is a flow chart for describing a control method of an acoustic output device according to an exemplary embodiment.

The exemplary embodiments of the present invention may be diversely modified. Accordingly, specific exemplary embodiments are illustrated in the drawings and are described in detail in the detailed description. However, it is to be understood that the present disclosure is not limited to a specific exemplary embodiment, but includes all modifications, equivalents, and substitutions without departing from the scope of the present invention. Also, well-known functions or constructions are not described in detail since they would obscure the disclosure with unnecessary detail.

The terms "first", "second", etc. may be used to describe diverse components, but the components are not limited by the terms. The terms are only used to distinguish one component from the others.

The terms used in the present application are only used to describe the exemplary embodiments, but are not intended to limit the scope of the invention. The singular expression also includes the plural meaning as long as it does not differently mean in the context. In the present application, the terms "include" and "consist of" designate the presence of features, numbers, steps, operations, components, elements, or a combination thereof that are written in the specification, but do not exclude the presence or possibility of addition of one or more other features, numbers, steps, operations, components, elements, or a combination thereof.

In the exemplary embodiments of the present invention, a "module" or a "unit" performs at least one function or operation, and may be implemented with hardware, software, or a combination of hardware and software. In addition, a plurality of "modules" or a plurality of "units" may be integrated into at least one module except for a "module" or a "unit" which has to be implemented with specific hardware, and may be implemented with at least one processor (not shown).

Hereinafter, the present invention will be described in detail with reference to the accompanying drawings.

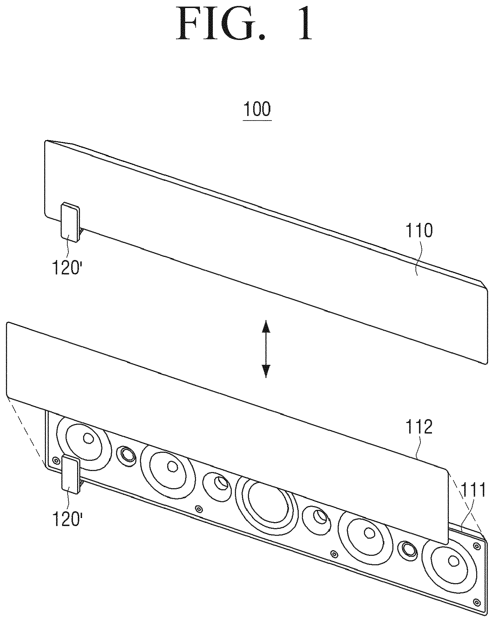

FIG. 1 is a view illustrating an implementation of an acoustic output device 100 according to an exemplary embodiment.

As illustrated in FIG. 1, the acoustic output device 100 may be implemented in a form in which the acoustic output device 100 includes a speaker unit 110 and a user interface device 120'.

As illustrated in FIG. 1, the speaker unit 110 may be implemented in a form in which the speaker unit 110 includes at least one speaker 111 (or a loudspeaker) arranged in a preset direction, for example, a horizontal direction and a cover 112 provided on a front surface of the at least one speaker 111 and covering the speaker 111.

The at least one speaker 111 may serve to convert an electrical pulse into a sound wave, and may be implemented in an electro-dynamic type, that is, a dynamic type, depending on an operating principle and a method of converting the electrical signal into the sound wave. However, the at least one speaker 111 is not limited to being implemented in the electro-dynamic type, but may be implemented in an electrostatic type, a dielectric type, a magneto-striction type, or the like.

In addition, the at least one speaker 111 may be implemented in a multi-way scheme of dividing a reproduction range into a low pitched sound, a middle pitched sound, and a high pitched sound and assigning the low pitched sound, the middle pitched sound, and the high pitched sound to speakers each appropriate for the low pitched sound, the middle pitched sound, and the high pitched sound. For example, in the case of a three-way scheme of assigning the low pitched sound, the middle pitched sound, and the high pitched sound to three speakers, the at least one speaker 111 may be implemented in a form in which it includes a high range speaker (tweeter) for reproducing a high frequency acoustic signal, a middle range speaker (midrange speaker) for reproducing a middle frequency acoustic signal, a low range speaker (or a woofer) for reproducing a low frequency acoustic signal, and the like.

The cover 112 is implemented by a thin grill made of a fiber or a metal, and serves to cover and protect the speaker.

The user interface device 120' may be implemented as a device that is physically movable in a preset direction, for example, the horizontal direction in which the at least one speaker 111 is arranged, on the cover 112. However, the user interface device 120'is not limited thereto, but may also be implemented to be physically movable in a vertical direction in the case in which the speaker 110 is disposed in the vertical direction. In some cases, the user interface device 120' may also be implemented to be physically movable in different directions regardless of a direction in which the speaker is arranged.

The acoustic output device 100 according to an exemplary embodiment may provide a linear (i.e., a sequential) pre-listening function (i.e., a preview function) for acoustic contents depending on a scroll interaction of the user interface device 120'. Hereinafter, the exemplary embodiments will be described in detail with reference to the accompanying drawings. However, the above-mentioned implementation illustrates an example, and the acoustic output device according to an exemplary embodiment may be applied without being limited as long as the acoustic output device 100 may provide the linear / sequential pre-listening function depending on the scroll interaction. For example, also in the case in which a user terminal device provides the linear / sequential pre-listening function (i.e., a preview function) for the acoustic contents depending on the scroll interaction through a scroll user interface (UI) provided in a graphic user interface (GUI) form, the principle of the exemplary embodiment may be similarly applied.

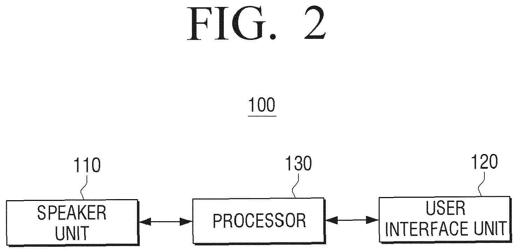

FIG. 2 is a view illustrating a configuration of the acoustic output device 100 according to an exemplary embodiment.

As illustrated in FIG. 2, the acoustic output device 100 is configured to include a speaker unit 110, a user interface unit 120, and a processor 130.

The speaker unit 110 includes at least one speaker 111.

The user interface unit 120 provides a user interface region to which acoustic contents are mapped and a scroll UI for browsing the acoustic contents depending on a scroll interaction on the user interface region. Here, the scroll UI serves to guide a position of an acoustic content selected depending on the scroll interaction in the user interface region to which all the acoustic contents are mapped.

Here, the user interface region may be implemented in various forms depending on an implementation of the acoustic output device 100. As an example, in the case in which the acoustic output device 100 is implemented as the acoustic output device 100 as described above with reference to FIG. 1, the user interface region may be implemented as a region prepared by the cover 112 covering the speaker 111. As another example, in the case in which the acoustic output device 100 is implemented as a display device such as a television (TV) or a smart phone, the user interface region may be implemented as a region provided in a display screen.

The scroll UI may also be implemented in various forms depending on an implementation of the acoustic output device 100. As an example, in the case in which the acoustic output device 100 is implemented as the acoustic output device 100 as described above with reference to FIG. 1, the scroll UI may be implemented as the physically movable device as described above with reference to FIG. 1. However, in the case in which the acoustic output device 100 is implemented as the display device such as the TV or the smart phone, the scroll UI may also be provided in a GUI form.

In detail, in the case in which the acoustic output device 100 is implemented as a touch based device, when a desired album is highlighted depending on a touch interaction of scrolling a music list, a pre-listening function (i.e., a preview function) may be provided. Alternatively, when the desired album is highlighted depending on an interaction of scrolling the music list using a remote controller, a user motion, a user voice, or the like, in a device that is not touch based device, the pre-listening function may be provided. For example, a scroll manipulation may be input by a manipulation input to a touch pad included in the remote controller, a gesture manipulation of the remote controller, a pointing manipulation, a hand gesture manipulation of the user, or the like. In this case, a highlight GUI may move depending on a user interaction. Alternatively, contents on the music list may move to a highlight GUI position fixed to a preset position.

However, hereinafter, for convenience of explanation, the case in which the user interface region is implemented as a speaker cover region as described above with reference to FIG. 1 and the scroll UI is implemented by the physically movable device as described above with reference to FIG. 1 will be mainly described.

The processor 130 may reproduce a preset section of an acoustic content corresponding to a position at which the scroll UI stops on the user interface region depending on the scroll interaction to provide a pre-listening function (i.e., a preview function) for the corresponding acoustic content through the speaker unit 110. Here, the scroll interaction may be at least one of an interaction by a manual manipulation of the user, an interaction by a remote controller manipulation of the user, and an automatic interaction depending on a control of the processor 130.

In this case, the processor 130 may determine the acoustic content corresponding to the position at which the scroll UI stops among all the acoustic contents mapped to the user interface region and reproduce a preset section of the corresponding acoustic content to provide the pre-listening function for the corresponding acoustic content. In detail, the processor 130 may map contents of virtual acoustic content lists to the user interface region to determine the acoustic content corresponding to the position of the scroll UI among the acoustic contents mapped to the user interface region. Therefore, the scroll UI serves to guide a position of the acoustic content in the virtual acoustic content lists mapped to the user interface region.

The processor 130 may reproduce a preset section of the acoustic content corresponding to the position at which the scroll UI stops on the user interface region, during the scroll UI stops at the position in the user interface region. Here, the preset section may be a highlight section. However, the preset section is not limited thereto, but may also be a first section, a middle section, a final section, or the like. Alternatively, different sections may be set to the preset section, for each acoustic content depending on setting of the user.

For example, the processor 130 may reproduce only a highlight section of the acoustic content corresponding to the position at which the scroll UI stops during the time in which the scroll UI stops or reproduce the highlight section during only a preset time (for example, five to ten seconds) and then stop reproducing the acoustic content, according to an exemplary embodiment. Alternatively, the processor 130 may reproduce the acoustic content corresponding to the position at which the scroll UI stops from the beginning of the acoustic content and continuously reproduce the acoustic content without stopping reproducing the acoustic content during the time in which the scroll UI stops (that is, during a time in which the corresponding acoustic content is selected) or continuously reproduce the acoustic content by reproducing the highlight section and repeatedly reproducing the highlight section or reproducing the acoustic content from the beginning of the acoustic content when section reproduction ends, according to another exemplary embodiment. In this case, the processor 130 may continuously reproduce the corresponding acoustic content during a time in which the scroll UI stays just like when a frequency is turned by moving a needle in an analog radio.

In detail, when the scroll UI continuously moves depending on the scroll interaction, the processor 130 may continuously reproduce preset sections of a plurality of acoustic contents corresponding to positions to which the scroll UI moves to provide a linear / sequential pre-listening function.

Meanwhile, according to an implementation of the acoustic output device 100, the speaker unit 110 maybe implemented in a form in which the speaker unit 110 includes at least one speaker 111 arranged in the preset direction and a cover unit 112 provided on a front surface of the at least one speaker 111 and covering the speaker 111. In this case, the scroll UI may be implemented by a device that is physically movable in the preset direction, for example, the direction in which the speaker is arranged, on the cover unit.

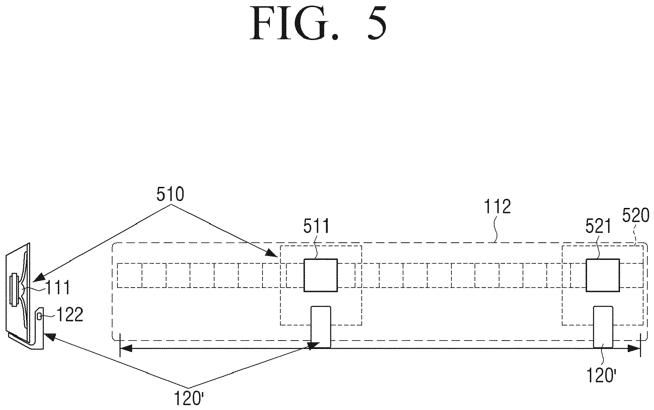

In this case, the processor 130 may project an image of information on the acoustic content corresponding to the position at which the scroll UI stops on the cover unit using a projector 122 (FIG. 5) included in the scroll UI. In detail, the processor 130 may project the image of the information on the acoustic content corresponding to the position at which the scroll UI stops on a region corresponding to the position at which the scroll UI stops on the cover unit. Here, the information on the acoustic content may be various types of information through which the corresponding acoustic content may be identified, such as an album jacket, a singer image, a content image, a title, track information, and the like.

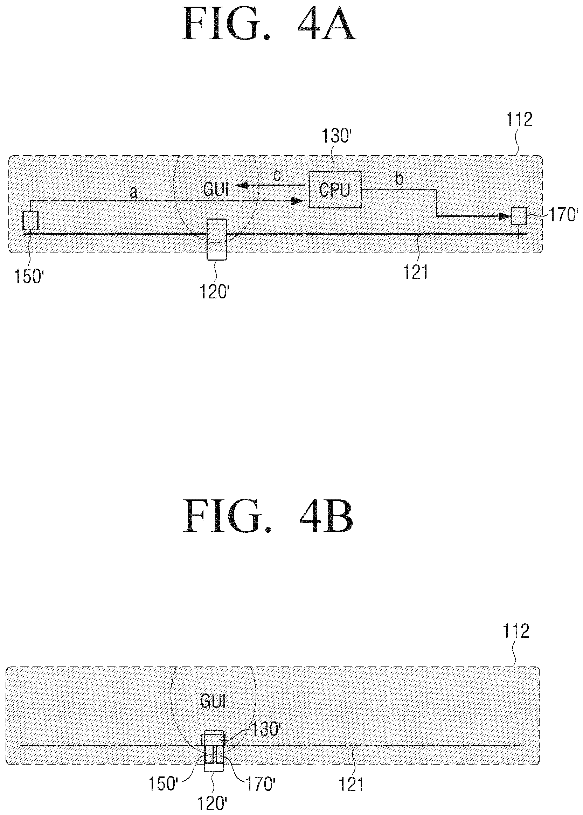

Meanwhile, the user interface unit 120 may be implemented in a form in which the user interface unit 120 includes a rail unit 121 (FIG. 4A) extending in a preset direction, for example, the direction in which the at least one speaker 111 is arranged, below the speaker unit 110 and implemented so that the scroll UI is physically movable along the rail unit 121.

In this case, the processor 130 may determine the acoustic content corresponding to the position at which the scroll UI moving on the rail unit 121 stops depending on a user command.

Meanwhile, the processor 130 may map the virtual acoustic content lists to a vertical direction on the user interface region and map a plurality of acoustic contents on the respective acoustic content lists to a horizontal direction on the user interface region. In this case, the processor 130 may determine one acoustic content list mapped to a region selected depending on a user command for selecting the acoustic content list mapped to the vertical direction and select an acoustic content mapped to the selected region and belonging to the corresponding acoustic content list through movement of the scroll UI in the horizontal direction. Here, a user command corresponding to the vertical direction may be a manipulation of leaning the scroll UI in front and rear directions or left and right directions, a manipulation of leaning the remote controller in the front and rear directions or the left and right directions, or the like, but is not limited thereto. For example, a corresponding manipulation may also be performed through a user motion, an audio command, or the like.

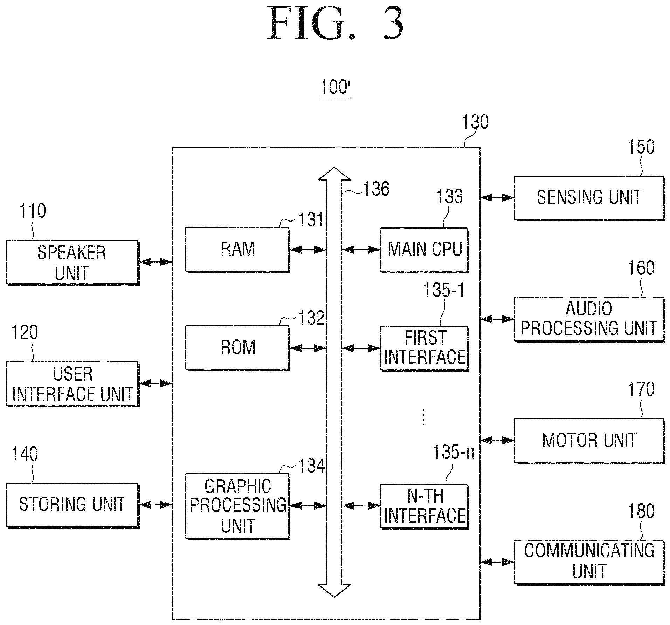

FIG. 3 is a block diagram illustrating a detailed configuration of the acoustic output device 100' illustrated in FIG. 2. As illustrated in FIG. 3, the acoustic output device 100' is configured to include a speaker unit 110, a user interface unit 120, a processor 130, a storing unit 140, a sensing unit 150, an audio processing unit 160, and a motor unit 170. A detailed description for components overlapped with the components illustrated in FIG. 2 among components illustrated in FIG. 3 will be omitted.

The processor 130 may control an operation of the acoustic output device 100'.

In detail, the processor 130 includes a random access memory (RAM) 131, a read only memory (ROM) 132, a main central processing unit (CPU) 133, a graphic processing unit 134, first to n-th interfaces 135-1 to 135-n, and a bus 136.

The RAM 131, the ROM 132, the main CPU 133, the graphic processing unit 134, and the first to n-th interfaces 135-1 to 135-n may be connected to each other through the bus 136.

The first to n-th interfaces 135-1 to 135-n are connected to the above-mentioned various components. One of the interfaces may be a network interface connected to an external device through a network.

The main CPU 133 accesses the storing unit 140 to perform booting using an operating system stored in the storing unit 140. In addition, the main CPU 133 performs various operations using various programs, contents, data, or the like, stored in the storing unit 140.

An instruction set for booting a system, or the like, is stored in the ROM 132. When a turn-on command is input to supply power, the main CPU 133 copies the operating system stored in the storing unit 140 depending on an instruction stored in the ROM 132 to the RAM 131 and executes the operating system to boot the system. When the booting is completed, the main CPU 133 copies various application programs stored in the storing unit 140 to the RAM 131 and executes the application programs copied to the RAM 131 to perform various operations.

The graphic processing unit 134 renders a screen including various objects such as an icon, an image, a text, and the like, for example, a screen including information on an acoustic content of which an image is projected on a user interface region, using a calculating unit (not illustrated) and a rendering unit (not illustrated). The calculating unit (not illustrated) calculates attribute values such as a coordinate value, a form, a size, a color, or the like, at which the respective objects are to be displayed depending on a layout of the screen based on a received control command. The rendering unit (not illustrated) renders various layouts of screens including the objects based on the attribute values calculated in the calculating unit (not illustrated). The screen rendered in the rendering unit (not illustrated) is displayed in a user interface region of the display unit 110.

Meanwhile, the sensing unit 150 may sense a movement amount of the scroll UI and convert the sensed movement amount into a digital signal. As an example, the sensing unit 150 may be implemented by a rotary encoder, which is a sensor measuring a position of an object by a photoelectric method.

In detail, the rotary encoder is divided into an absolute rotary encoder and an incremental rotary encoder, and an example of the rotary encoder includes a totem-pole, an NPN open collector, a line driver, and the like, depending on a kind of output thereof. In addition, the rotary encoder is divided into a magnetic rotary encoder and an optical rotary encoder depending on a scheme thereof, and outputs a square wave pulse. Particularly, a scheme of measuring a position and a rotation speed of the rotary encoder includes an analog scheme and a digital scheme, and the digital scheme and the optical rotary encoder are mainly used. In the optical rotary encoder, when light emitted from a light emitting diode (LED) passes through slots of a rotary plate and a fixed plate and is then received in a photo transistor, the light may be changed into an electrical signal, and the electrical signal may be output as a square wave having a duty ratio of 50% through a comparator.

Therefore, the sensing unit 150 implemented by the rotary encoder may convert the movement amount of the scroll UI into the digital signal using the rotary plate rotating depending on the movement amount of the scroll UI, and the processor 130 may calculate a position of the scroll UI on the user interface region based on the converted digital signal and determine an acoustic content corresponding to the calculated position.

The audio processing unit 160 may process an audio signal so as to be appropriate for an output range of the speaker unit 110 and sound quality set by the user.

In addition, the motor unit 170 may drive the scroll UI so as to be physically movable using a motor. That is, the motor unit 170 may control movement of the scroll UI together with the sensing unit 150 described above.

A communicating unit 180 performs communication with an external device through various communication schemes such as wireless fidelity (Wi-Fi), Bluetooth (BT), Zigbee, infrared (IR), serial interface, universal serial bus (USB), near field communication (NFC), and the like. For example, the communicating unit 180 may receive an acoustic content in a streaming or download form from an external server based on information on the acoustic content selected by the scroll UI.

The operation of the processor 130 described above may be performed by a program stored in the storing unit 140.

The storing unit 140 stores various data such as an operating system software module for driving the acoustic output device 100' and various multimedia contents therein.

Particularly, the storing unit 140 may store programs such as a sensing module, a communicating module, a projector module, a position calculating module, an acoustic content determining module, and a pre-listening function providing module, and the like, that are required for providing the pre-listening function according to an exemplary embodiment .

The sensing module is a module collecting information from various sensors and analyzing and managing the collected information. Particularly, the sensing module serves to process a value related to the movement of the scroll UI sensed by the sensing unit 150.

The communicating module may receive an audio signal in a streaming or download form from an external device or receive a control signal of the scroll UI, a signal for selecting and reproducing the acoustic content, and the like, and process the received signal.

The position calculating module may serve to calculate a position of the scroll UI in the user interface region based on the sensed value processed through the sensing module.

The acoustic content determining module may serve to determine an acoustic content corresponding to the position of the scroll UI calculated through the position calculating module. In detail, the acoustic content determining module may determine what acoustic content corresponds to the position at which the scroll UI stops in the user interface region to which all the acoustic contents are mapped. Then, the processor 130 may reproduce a preset section of the acoustic content determined using the pre-listening function providing module to provide a pre-listening function for the corresponding acoustic content.

In addition, the projector module may serve to control a projector 122 included in the scroll UI. For example, the projector module may serve to process an image of information on the acoustic content determined through the acoustic content determining module to project the image through the projector 122 included in the scroll UI.

As described above, the processor 130 may determine the acoustic content corresponding to the position of the scroll UI depending on the scroll interaction in the user interface region to which all the acoustic contents are mapped using various software modules stored in the storing unit 140 and provide the pre-listening function for the corresponding acoustic content.

In the case in which the scroll UI is implemented by the physical user interface device 120' as illustrated in FIG. 1, a structure for determining movement and a position of the user interface device 120' will be described in detail.

FIGS. 4A and 4B are views for describing implementations of acoustic output devices according to various exemplary embodiments.

As illustrated in FIG. 4A, an acoustic output device 100 according to an exemplary embodiment may be implemented in a form in which acoustic output device 100 includes a user interface device 120' by which a scroll UI is physically implemented, a rail unit 121 implemented so that the user interface device 120' is physically movable along the rail unit 121, a rotary encoder 150' determining a position of the user interface device 120', and a motor 170' physically driving the user interface device 120'.

The rail unit 121 may include a rail and a timing belt required for the user interface device 120' to physically move, and when the timing belt is operated by the movement of the user interface device 120', a rotary plate of the rotary encoder 150' rotates simultaneously with the operation of the timing belt, such that a rotation amount of the rotary plate is converted into an electrical signal. The electrical signal converted as described above includes information on a position of the user interface device 120' depending on a movement amount of the user interface device 120'.

When the rotary encoder 150 transmits (a) the information with respect to the position of the user interface device 120' along the rail unit 121 to the processor 130', the processor 130' may project (c) an image of the information of the acoustic content in a GUI form on the user interface region through a projector 122 included in the user interface device 120' using the graphic processing unit 134 and the projector module stored in the storing unit 140.

The motor unit 170 may drive the timing belt included in the rail unit 121 depending on the movement of the user interface device 120'. In addition, in the case in which the user interface device 120' moves based on a control signal received by a remote controller, the processor 130 may detect position data from the received control signal and control (b) a motor included in the motor unit 170' based on the detected position data to operate the timing belt, thereby moving the user interface device 120'.

Although the case in which the processor 130', the sensing unit 150', the motor unit 170', and the user interface device 120' are independently separated from each other, respectively, has been described by way of example in FIG. 4A, the processor 130', the sensing unit 150', and the motor unit 170' may also be implemented to be included together in the user interface device 120'.

Referring to FIG. 4B, it may be appreciated that the processor 130', the sensing unit 150', and the motor unit 170' are included together in the user interface device 120', examples described with reference to FIG. 4A may be similarly applied as operations of the respective components.

Particularly, in the case in which the processor 130', the sensing unit 150', and the motor unit 170' are implemented to be included in the user interface device 120', as illustrated in FIG. 4B, a structure of the user interface unit 120' is simplified, such that a thickness and a size of the acoustic output device 100 may be decreased.

The rail unit 121 illustrated in FIGS. 4A and 4B may be designed to be modified depending on a size of the user interface region.

An implementation of the acoustic output device 100 has been described through a structure of changing a position of the user interface device 120' with reference to FIGS. 4A and 4B, and a process in which the processor 130 projects information related to an acoustic content on the cover unit 112 which has a user interface region will be described in detail with reference to FIG. 5.

FIG. 5 is a view for describing a method of providing a GUI onto a cover unit 112 according to an exemplary embodiment.

Referring to FIG. 5, it may be appreciated that the speaker 111, the cover unit 112 disposed on the front surface of the speaker 111, and the user interface device 120' are illustrated at the left of FIG. 5. Here, the cover unit 112 may be used as the user interface region for browsing the acoustic contents, and the projector 122 included in the user interface device 120' may project an image on the user interface region.

In detail, it may be appreciated that the front surface of the cover unit 112, that is, the user interface region on which the image projected from the projector 122 is displayed, is illustrated at the right of FIG. 5 and the movable user interface device 120' is positioned on a front surface of the user interface region.

In the method illustrated in FIG. 5, the user interface device 120' may move along the cover unit 112 of the speaker unit 110. In the exemplary embodiment, the user interface device 120' may be position at a first position 510 of the cover unit 112 and first information 511 of an acoustic content mapped on a first area corresponding to the first position 510 of the user interface device 120' may be highlighted. Further, when the user interface device 120' moves to the right along the cover unit 112 and stops at a second position 520 of the cover unit 112, second information 521 of another acoustic content mapped on a second area corresponding to the second position 520 of the user interface device 120' maybe highlighted.

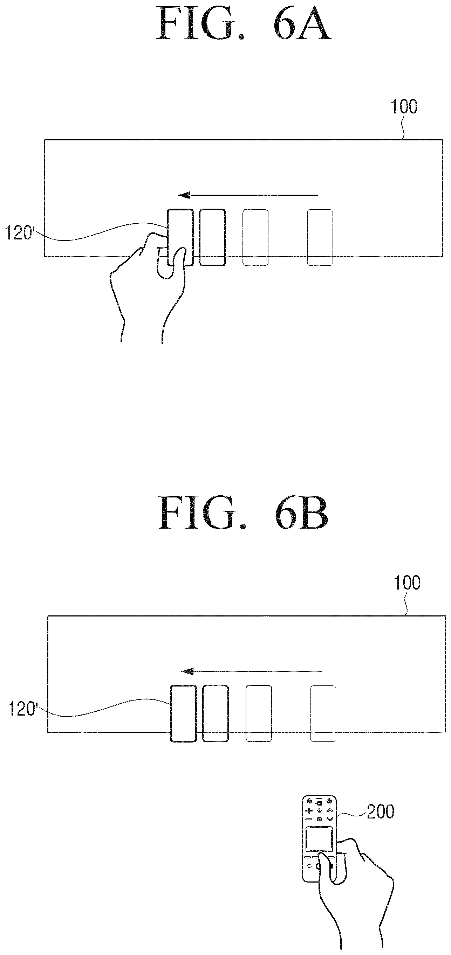

FIGS. 6A and 6B are views for describing a method of controlling a scroll state of a scroll UI 120' according to various exemplary embodiments.

The scroll UI 120' may be manually controlled depending on a user interaction, as illustrated in FIG. 6A, or be automatically controlled by a remote controller 200, as illustrated in FIG. 6B.

For example, as illustrated in FIG. 6A, the user may directly hold the scroll UI 120' with his/her hand and then move the scroll UI 120' in a desired direction to perform a scroll interaction.

Alternatively, as illustrated in FIG. 6B, the user may control a scroll state (e.g., a scrolling position) of the scroll UI 120' through remote controlling (for example, a pointing input, a button input, a touch input through a touch pad, or the like) by the remote controller 200. In the exemplary embodiment, the acoustic output device 100 may be implemented to perform communication with the remote controller 200. For example, a communicating module that may perform communication with the remote controller 200 may be included in the scroll UI 120' on the scroll UI 120' or be included in the acoustic output device 100 on the exterior of the scroll UI 120'. In the latter case, the processor 130 may control a driving state of a motor (not illustrated) depending on a received remote control signal to control the scroll state of the scroll UI 120'.

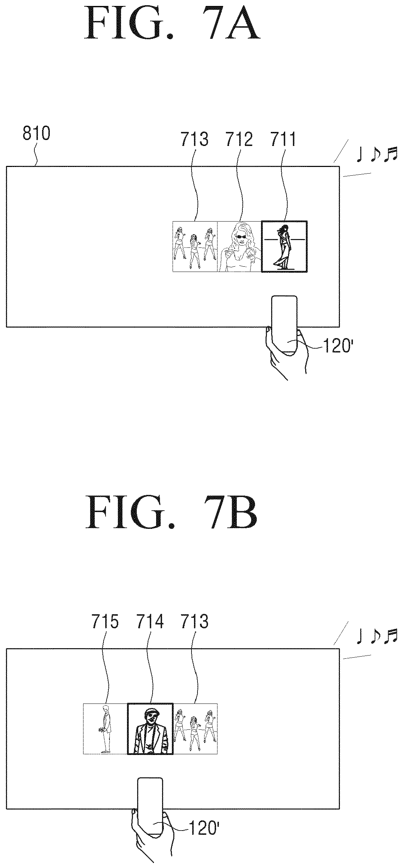

FIGS. 7A to 7C are views for describing a method of providing a pre-listening function according to an exemplary embodiment.

As illustrated in FIG. 7A, pre-listening (for example, a preview or reproduction of a highlight portion) for an acoustic content corresponding to a position at which the scroll UI 120' stops / or positioned may be provided depending on the scroll interaction in the user interface region. In the exemplary embodiment, information 711 of the corresponding acoustic content may be provided at the position at which the scroll UI 120' stops, and information of acoustic contents 712 and 713 corresponding to positions adjacent to the position at which the scroll UI 120' stops may also be provided in a preview form (for example, a form in which an image is unclearly projected compared to the information 711).

Then, as illustrated in FIG. 7B, when the scroll UI 120' moves leftward depending on a manipulation of the user, pre-listening for an acoustic content corresponding to a position to which the scroll UI 120' moves may be provided. Also in the exemplary embodiment, similar to the case of FIG. 7A, information 714 of the corresponding acoustic content may be provided at a position at which the scroll UI 120'stops, and information on acoustic contents 713 and 715 corresponding to positions adjacent to the position at which the scroll UI 120' stops may also be provided in a preview form.

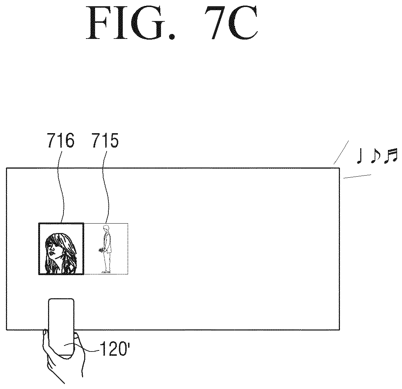

Then, as illustrated in FIG. 7C, when the scroll UI 120' continuously moves leftward depending on a manipulation of the user, pre-listening for an acoustic content corresponding to a position to which the scroll UI 120' moves may be provided. Also in the exemplary embodiment, similar to the case of FIG. 7A, information 716 on the corresponding acoustic content may be provided at a position at which the scroll UI 120' stops.

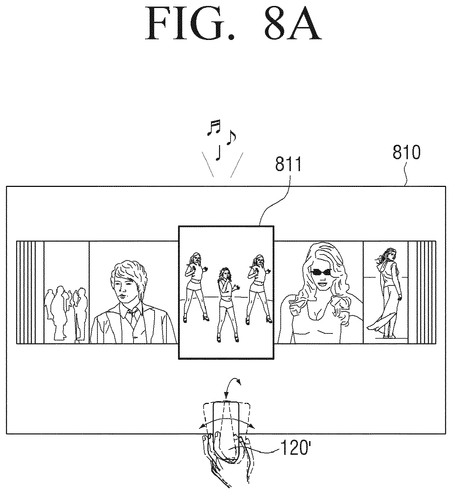

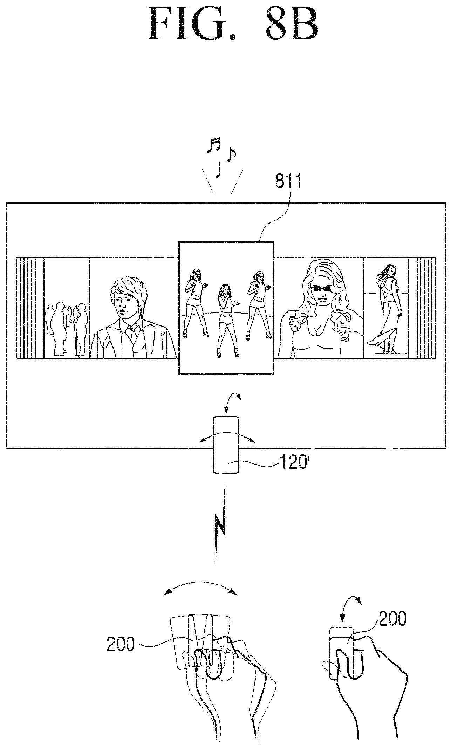

FIGS. 8A and 8B are views for describing a method of selecting an acoustic content during provision of a pre-listening function according to an exemplary embodiment.

As illustrated in FIG. 8A, in a state in which the scroll UI 120' stops in a region to which a specific acoustic content is mapped, the specific acoustic content may be selected and reproduced depending on a preset user command. For example, in a state in which pre-listening for the specific acoustic content is provided depending on the position of the scroll UI 120' in the region to which the specific acoustic content is mapped, when a user manipulation of leaning the scroll UI 120' in front and rear/left and right directions is input, the corresponding acoustic content may be reproduced from the beginning thereof. Here, the user command for selecting the acoustic content may be input in various forms such as an input of a button provided in the scroll UI 120'.

In addition, as illustrated in FIG. 8B, in the state in which the pre-listening for the corresponding acoustic content is provided, a manipulation state of the scroll UI 120' may also be controlled depending on a user manipulation of leaning the remote controller 200 in the front and rear/left and right directions. However, an example illustrated in FIG. 8B is only an example, and the acoustic content may also be directly selected based on a signal depending on a manipulation of the remote controller 200 without manipulating the scroll UI 120'.

Information on the acoustic content mapped to the user interface region 810 may be provided in a form in which information is overlapped and displayed, as illustrated in FIGS. 8A and 8B, or be provided in a form (for example, enlargement form) in which information on the acoustic content selected by the scroll UI 120' is distinguished from information on other acoustic contents, as illustrated.

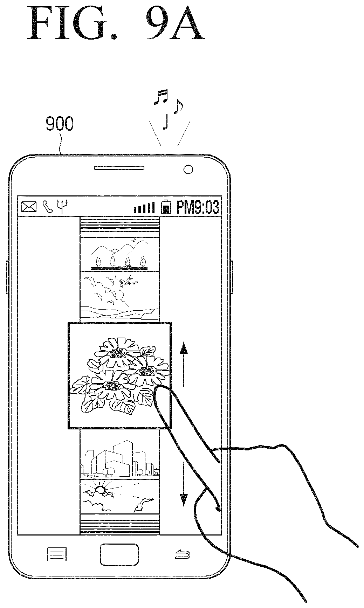

FIGS. 9A to 9C are views for describing a method of providing a pre-listening function in a touch-based device according to an exemplary embodiment.

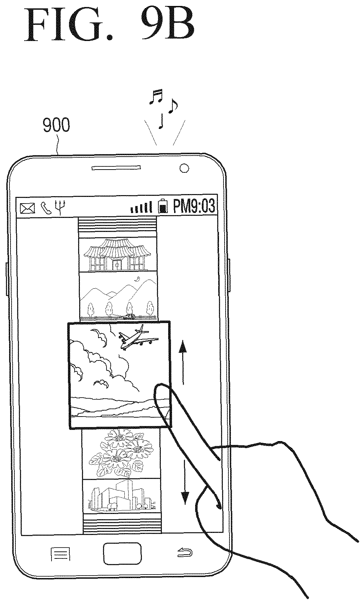

As illustrated in FIGS. 9A and 9B, on the touch-based device 900 (for example, a smart phone), a user may scroll through an acoustic content list depending on a touch scroll manipulation of the user to execute a pre-listening function provided by the touch-based device 900.

As illustrated in FIGS. 9A and 9B, a pre-listening function for acoustic content selected depending on a scroll manipulation of the user may be provided while the acoustic content being highlighted and displayed. In the exemplary embodiment, acoustic content positioned in a specific region (for example, a central region) on a screen may be selected in an acoustic content selected list depending on a scroll, but is not limited thereto.

In addition, as illustrated in FIGS. 9A and 9B, acoustic contents that are not selected may be partially overlapped and displayed and only the selected album may be displayed in a complete shape, but are not limited thereto. That is, the acoustic contents that are not selected may also be displayed in a complete shape.

In addition, although not illustrated in FIGS. 9A and 9B, the acoustic contents that are not selected may be blurred and then displayed and only the selected acoustic content may be clearly displayed, but are not limited thereto.

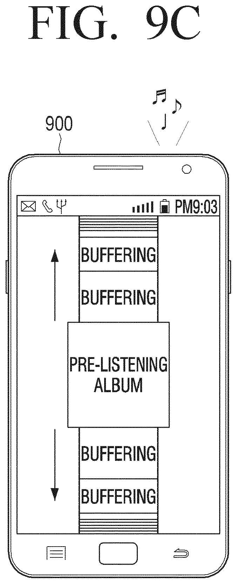

As illustrated in FIG. 9C, remaining acoustic contents adjacent to the selected acoustic contents on the list may be buffered in advance during a period in which a pre-listening function for the selected album is provided. For example, the number (for example, about 7 to 8) of buffered acoustic contents may be determined in proportion to a scroll speed, be set to a default, or be set by the user.

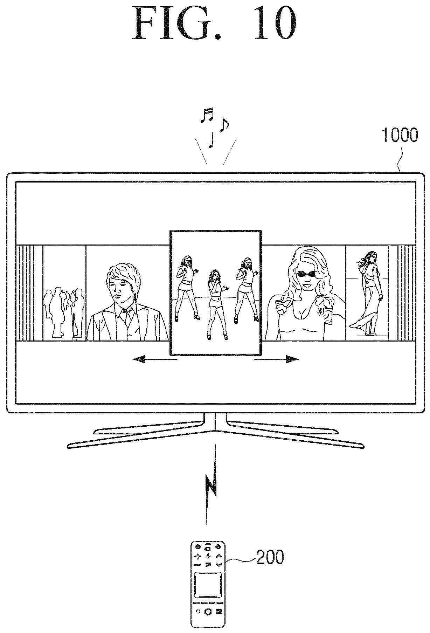

FIG. 10 is a view for describing a method of providing a pre-listening function in a device 1000 that may be remotely controlled according to an exemplary embodiment.

As illustrated in FIG. 10, on the device 1000 (for example, a digital TV) that may be remotely controlled, a user may scroll through an acoustic content list by a remote control manipulation of the remote controller 200 to execute the pre-listening function on the device 1000.

For example, a highlight may move depending on a scroll through the remote controller 200, such that an acoustic content may be selected on the list or the list may move depending on the scroll, such that an acoustic content positioned at a highlight fixed to a preset position (for example, a central region of a screen) may be selected. The contents described above with reference to FIGS. 9A to 9C may be similarly applied to other various exemplary embodiments such as a list display method, buffering, and the like.

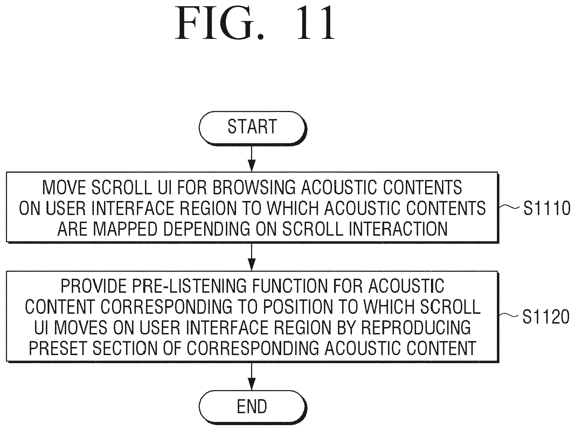

FIG. 11 is a flow chart for describing a control method of an acoustic output device 100 according to an exemplary embodiment.

According to the control method of an acoustic output device 100 illustrated in FIG. 11, the scroll UI for browsing acoustic contents on the user interface region to which the acoustic contents are mapped is moved depending on the scroll interaction (S1110).

Then, a pre-listening function for an acoustic content mapped to a position to which the scroll UI moves on the user interface region is provided by reproducing a preset section of the corresponding acoustic content (S1120).

In the exemplary embodiment, in the providing (S1120) of the pre-listening function, the preset section of the acoustic content mapped to the position at which the scroll UI stops on the user interface region may be reproduced during the time in which the scroll UI stops.

In addition, in the providing (S1120) of the pre-listening function, when the scroll UI continuously moves depending on the scroll interaction, preset sections of a plurality of acoustic contents corresponding to each of positions to which the scroll UI continuously moves may be continuously reproduced to provide a linear (i.e., a sequential) pre-listening function.

Further, in the providing (S1120) of the pre-listening function, virtual acoustic content lists may be mapped to the user interface region to determine and reproduce the acoustic content corresponding to the position of the scroll UI among all the acoustic contents mapped to the user interface region.

In addition, the control method of an acoustic output device may further include providing information on an acoustic content corresponding to a changed position of the scroll UI to a region corresponding to the changed position of the scroll UI when a position of the scroll UI is changed depending on a user command.

Here, the acoustic output device may be implemented in a form in which it includes at least one speaker arranged in a preset direction and a cover unit provided on a front surface of the at least one speaker and covering the speaker, and the scroll UI may be implemented by a device that is physically movable in the preset direction in the cover unit.

In addition, the acoustic output device may be implemented to further include a rail unit disposed in the preset direction below the speaker unit and implemented so that the scroll UI is physically movable. In this case, in the providing (S1120) of the pre-listening function, the acoustic content corresponding to a position at which the scroll UI moving depending on a user command on the rail unit stops may be determined.

Further, in the providing (S1120) of the pre-listening function, an absolute coordinate of the scroll UI on the rail unit may be sensed using a sensor, and the acoustic content corresponding to the position at which the scroll UI stops may be determined based on the sensed absolute coordinate.

In addition, the control method of an acoustic output device may further include reproducing the corresponding acoustic content from the beginning of the corresponding acoustic content when a music selection command is input through the scroll UI during a period in which pre-listening for the corresponding acoustic content is provided.

As described above, according to various exemplary embodiments, because continuous / sequential pre-listening for a plurality of acoustic contents is provided by only a simple user manipulation, convenience of the user is improved.

The methods according to various exemplary embodiments may be implemented by only upgrading software for an existing acoustic output device.

In addition, various exemplary embodiments described above may also be performed through an embedded server included in the acoustic output device or an external server of the acoustic output device.

In addition, a non-transitory computer readable medium in which a program sequentially performing the control method according to the exemplary embodiments is stored may be provided.

As an example, a non-transitory computer readable medium in which a program is stored may be provided, wherein the program performs a component reproducing the preset section of the acoustic content corresponding to the position to which the scroll UI moves to provide the pre-listening function for the corresponding acoustic content, when the scroll UI for browsing the acoustic contents on the user interface region to which the acoustic contents are mapped moves depending on the scroll interaction.

The non-transitory computer readable medium is not a medium that stores data therein for a while, such as a register, a cache, a memory, or the like, but means a medium that semi-permanently stores data therein and is readable by a device. In detail, various applications or programs described above may be stored and provided in the non-transitory computer readable medium such as a compact disk (CD), a digital versatile disk (DVD), a hard disk, a Blu-ray disk, a universal serial bus (USB), a memory card, a read only memory (ROM), or the like.

According to various exemplary embodiments, because continuous pre-listening for a plurality of acoustic contents is provided by only a simple user manipulation, convenience of the user is improved.

Although exemplary embodiments have been particularly illustrated and described hereinabove, it would be appreciated by those skilled in the art that various changes may be made without departing from the scope of the invention as defined by the claims.

## Claims

1. An acoustic output device comprising:
a speaker unit;
a user interface unit configured to provide a user interface region to which acoustic contents are mapped and comprising a scroll user interface (UI) for browsing the acoustic contents according to a scroll interaction on the user interface region; and
a processor configured to reproduce a preset section of an acoustic content mapped to a first area of the user interface region as he scroll UI moves through a position on the user interface region corresponding to the first area to provide a pre-listening function for the acoustic content through the speaker unit.

2. The acoustic output device as claimed in claim 1, wherein the processor is configured to reproduce the preset section of the acoustic content corresponding to the position at which the scroll UI stops on the user interface region during a time in which the scroll UI stops at the position.

3. The acoustic output device as claimed in claim 1 or 2, wherein the processor is configured to continuously reproduce a preset section of each of a plurality of acoustic contents mapped to a respective area, the respective area corresponding to each of positions through which the scroll UI continuously moves to provide a sequential pre-listening function in response to the scroll UI continuously moving according to the scroll interaction.

4. The acoustic output device as claimed in any one of claims 1 to 3, wherein the processor is configured to map acoustic content lists to the user interface region, and
wherein the processor is configured to determine and reproduce an acoustic content of all acoustic contents mapped to the user interface region according to a position of the scroll UI on the user interface region.

5. The acoustic output device as claimed in any one of claims 1 to 4, wherein the speaker unit comprises:
at least one speaker arranged in a preset direction; and
a cover unit provided on the at least one speaker and covering the at least one speaker, and
wherein the scroll UI comprises a device configured to move in the preset direction on the cover unit.

6. The acoustic output device as claimed in claim 5, wherein the scroll UI comprises a projector, and
wherein the processor is configured to control the projector to project an image of information on an acoustic content mapped on a second area, the second area corresponding to a changed position of the scroll UI on the user interface region in response to a position of the scroll UI being changed.

7. The acoustic output device as claimed in claim 5 or 6, wherein the user interface unit comprises a rail unit extending in the preset direction and the scroll UI is configured to move along the rail unit, and
wherein the processor is configured to determine the acoustic content mapped on the first area corresponding to the position at which the scroll UI stops according to a user command.

8. The acoustic output device as claimed in claim 7, further comprising a sensing unit configured to sense an absolute coordinate of the scroll UI on the rail unit,
wherein the processor is configured to determine the acoustic content mapped on the first area corresponding to the position at which the scroll UI stops based on the absolute coordinate sensed by the sensing unit.

9. The acoustic output device as claimed in any one of claims 1 to 8, wherein the processor is configured to reproduce the acoustic content mapped at the first area from beginning of the acoustic content in response to a selection command being input through the scroll UI during a period in which pre-listening for the acoustic content is provided through the speaker unit.

10. The acoustic output device as claimed in any one of claims 1 to 9, wherein the user interface unit comprises a touch screen, and
the processor is configured to browse through a plurality of acoustic contents according to touch interaction of scrolling the scroll UI on the touch screen.

11. A control method of an acoustic output device, the control method comprising:
moving a scroll UI for browsing acoustic contents on a user interface region to which the acoustic contents are mapped according to a scroll interaction; and
providing a pre-listening function for an acoustic content mapped to a first area of the user interface region as the scroll UI moves through a position of the user interface region corresponding to the area by reproducing a preset section of the acoustic content mapped on the first area.

12. The control method as claimed in claim 11, wherein the providing the pre-listening function comprises reproducing the preset section of the acoustic content mapped on the first area corresponding to the position at which the scroll UI stops on the user interface region during a time in which the scroll UI stops at the position.

13. The control method as claimed in claim 11 or 12, wherein the providing the pre-listening function comprises in response to the scroll UI continuously moving according to the scroll interaction, continuously reproducing a preset section of each of a plurality of acoustic contents mapped to a respective area, the respective area corresponding to each of positions through which the scroll UI continuously moves, to provide a sequential pre-listening function.

14. The control method as claimed in any one of claims 11 to 13, wherein the providing the pre-listening function comprises:
mapping acoustic content lists to the user interface region; and
determining and reproducing an acoustic content of all the acoustic contents mapped to the user interface region according to a position of the scroll UI on the user interface region.

15. The control method as claimed in any one of claims 11 to 14, further comprising providing information on an acoustic content mapped on a second area, the second area corresponding to a changed position of the scroll UI in response to the changed position of the scroll UI according to a user command.
